# EUROPEAN PATENT SPECIFICATION

(11) **EP 1 602 799 B1**
(45) Date of publication and mention of the grant of the patent: **02.02.2011**
(21) Application number: 05011184.8
(22) Date of filing: 24.05.2005
(51) Int. Cl.: F01C 1/02, F04C 18/02

(54) **Method of manufacturing an orbiting scroll in a scroll fluid machine**
Verfahren zur Herstellung einer umlaufenden Spirale einer Maschine des Spiraltyps
Méthode de production d'une volute rotative d'une machine à volutes

(30) Priority: 31.05.2004 JP 2004160527
(43) Date of publication of application: 07.12.2005
(73) Proprietor: ANEST IWATA CORPORATION, Yokohama-shi, Kanagawa-ken (JP)
(72) Inventor: Sato, Toru c/o Anest Iwata Corporation, Yokohama-shi Kanagawa (JP)
(74) Representative: Dr. Weitzel & Partner

(56) References cited:
- JP-A- 61 070 194
- JP-A- 2001 207 977
- US-A- 5 106 279
- US-A1- 2003 161 747

## Description

### BACKGROUND OF THE INVENTION

The present invention relates to a method of manufacturing an orbiting scroll in a scroll fluid machine such as a scroll compressor, a scroll vacuum pump, a scroll expander or a scroll blower such as disclosed in US-A-2003/161747.

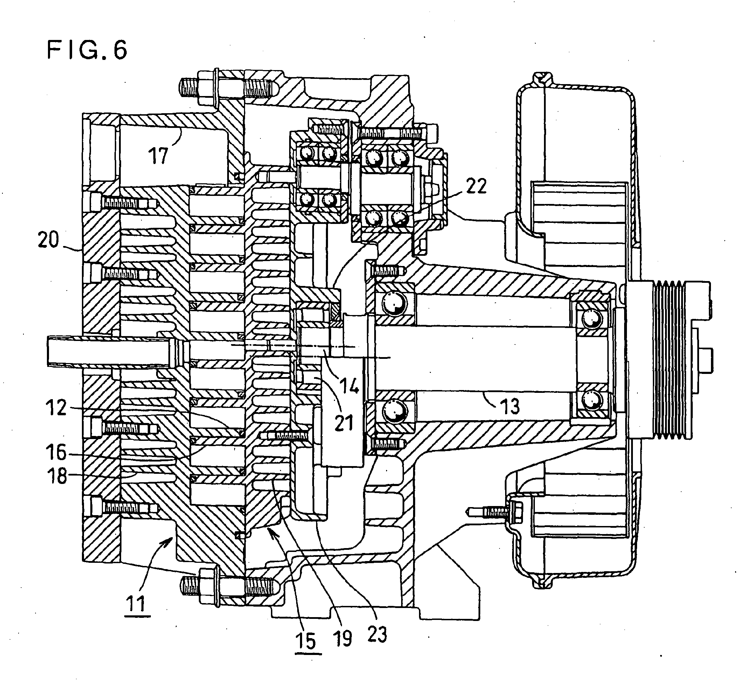

Fig. 6 shows a scroll fluid machine in which a fixed wrap 12 of a fixed scroll 11 engages with an orbiting wrap 16 of an orbiting scroll 15 rotatably connected to an eccentric axial portion 14 of a driving shaft 13. The orbiting scroll 15 is eccentrically revolved with respect to the fixed scroll 11 by the eccentric axial portion 14, thereby compressing a gas sucked through an air intake bore 17 as it moves toward a center. The rear surfaces of the scrolls 11, 15 have a plurality of cooling fins 18, 19 to release heat generated during operation.

The ends of the cooling fins 18 of the fixed scroll 11 are covered with a housing cover 20 to form a gas cooling path, while the ends of the cooling fins 19 of the orbiting scroll 15 are contacted with a bearing plate 23 which is rotatably mounted around the eccentric axial portion 14 via a bearing 21 and a bearing sleeve 22 to form a gas cooling path.

It is known that a predetermined compression or decompression is achieved by revolving the bearing plate 23 and the orbiting scroll 15 eccentrically by the eccentric axial portion 14.

To manufacture an orbiting scroll as described above, after working an orbiting scroll material and a bearing plate material separately, they are combined and the surfaces are treated.

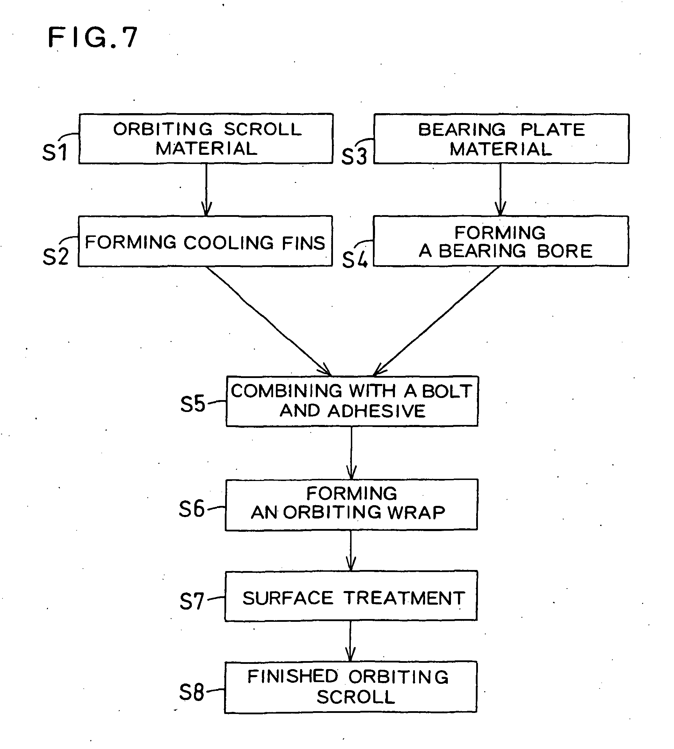

As shown in a flow chart of Fig. 7, an orbiting scroll is manufactured by the steps "S" below:
S1 : providing an orbiting scroll material;
S2 : forming a plurality of cooling fins on the orbiting scroll material;
S3 : providing a bearing plate material;
S4 : forming a bearing bore in a bearing sleeve of the bearing plate material;
S5 : aligning outer shapes of both the materials to combine them with a bolt and an adhesive;
S6 : working an orbiting scroll with reference to the bearing bore;
S7 : applying surface treatment on the combined materials; and
S8 : obtaining a complete orbiting scroll.

However, such a method is disadvantageous in terms of productivity and precision of a product.
(a) Because an orbiting wrap is cut based on a bearing bore of the bearing plate material combined with the orbiting scroll material, positioning accuracy of the orbiting wrap depends on a position and precision of the bearing bore. As the position and precision of the bearing bore are not necessarily high order of accuracy, it is impossible to obtain products with high precision in micron order.
(b) Because the orbiting wrap is worked after combining the orbiting scroll material and the bearing plate material, handling and processing are difficult and workability is low.
(c) Surface treatment is applied after combining the orbiting scroll material having the cooling fins formed thereon and the bearing plate material having the bearing bore formed therein. Such surface treatment is not generally required for the bearing plate material, and unnecessary work and cost are involved.
(d) To cut the orbiting wrap after combining both materials, if one of the materials is found to be bad in quality or defective, it is difficult to take out only the material which is plastically deformed or has accumulated stress during the steps. Therefore, both the materials must be dumped together, which is uneconomical.

### SUMMARY OF THE INVENTION

In view of the foregoing disadvantages in the prior art, it is an object of the present invention to provide a method of manufacturing an orbiting scroll in a scroll fluid machine in which the orbiting scroll is combined with a bearing plate in high precision at low cost.

### BRIEF DESCRIPTION OF THE DRAWINGS

Fig. 1 is a flow chart showing a method of manufacturing an orbiting scroll in a scroll fluid machine according to the present invention;
Fig. 2 is a front view of an orbiting scroll material used in the present invention;
Fig. 3 is a front view showing a relationship between reference bores in Fig. 2 and an area in which the end of a fixed wrap of a fixed scroll slides;
Fig. 4 is a front view showing a relationship between a reference bore positioned in a center and an area slid by a fixed wrap of a fixed scroll in Fig. 2;
Fig. 5 is a vertical sectional side view of an orbiting scroll material and a bearing plate material;
Fig. 6 is a vertical sectional side view of a scroll fluid machine in which the present invention is carried out; and
Fig. 7 is a flow chart of a known method of manufacturing an orbiting scroll.

### DETAILED DESCRIPTION OF PREFERRED EMBODIMENTS

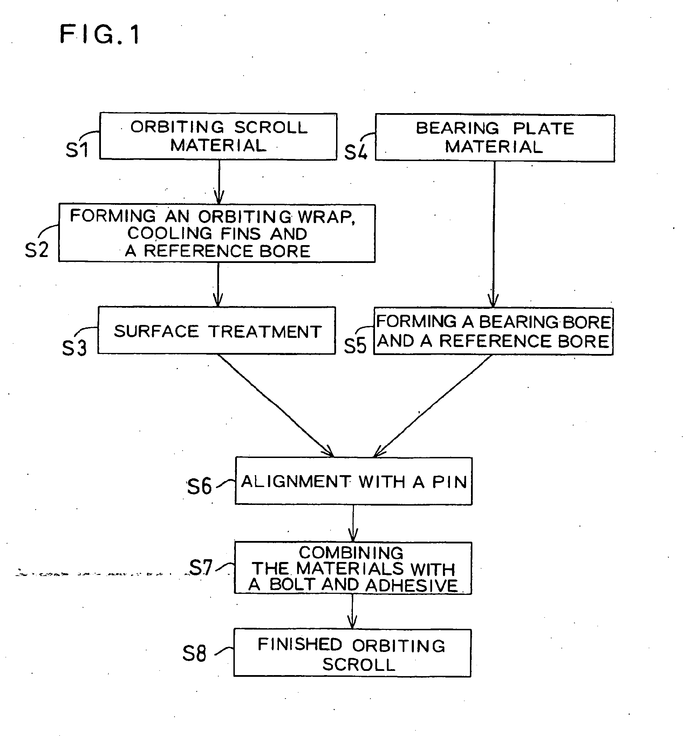

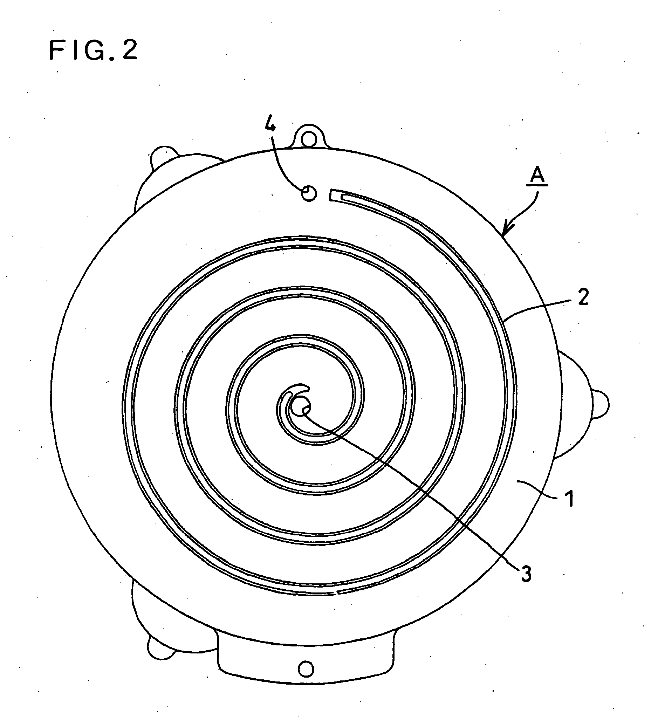

An embodiment of the present invention will be described with reference to Figs. 1 to 5.

The following steps "S" are carried out as shown in Fig. 1 which is compared with the conventional method in Fig. 7:
S1 : providing an orbiting scroll material;
S2 : forming a plurality of cooling fins and an orbiting wrap on the orbiting scroll material and perforating axial reference bores at suitable positions;
S3 : applying surface treatment on the orbiting scroll material;
S4 : providing a bearing plate material;
S5 : perforating a bearing bore and axial reference bores corresponding to the reference bores of the orbiting scroll material in the bearing plate material;
S6 : aligning the reference bores of both the materials and inserting positioning pins parallel to each other therein;
S7 : combining the orbiting scroll material with the bearing plate material with a bolt and an adhesive; and
S8 : obtaining a complete orbiting scroll.

A reference bore 3 extending axially and having circular cross section is formed with high precision at a center of a base circle or at the inner end of an orbiting wrap 2 formed on an orbiting end plate 1 of orbiting scroll material "A".

A reference bore 4 extending axially and having circular cross section is formed with high precision at a position radially far from the center of the base circle at the outer end of the orbiting wrap 2.

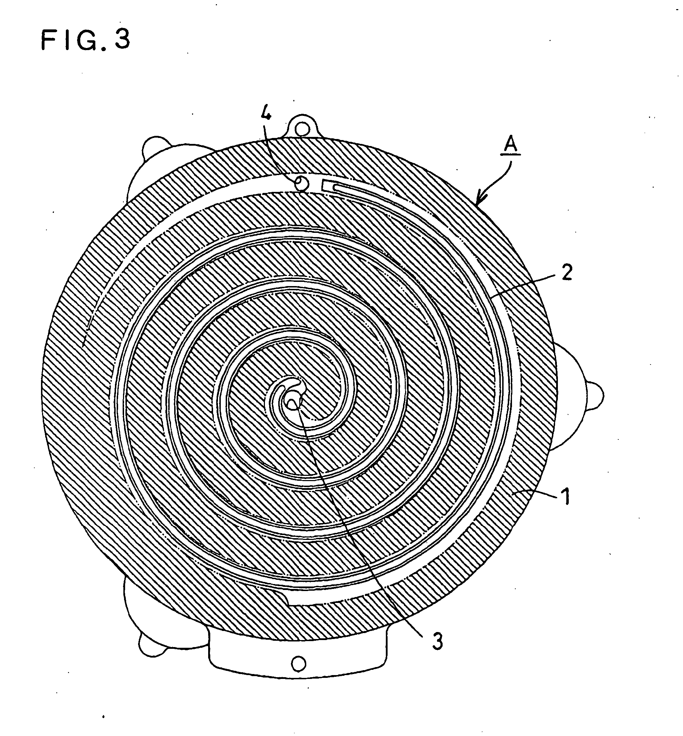

As illustrated in Fig. 3, both the reference bores 3,4 are formed outside an area (shown with hatching) in which a tip or dust seal on the end of the fixed wrap of the fixed scroll is in sliding contact with the orbiting end plate 1.

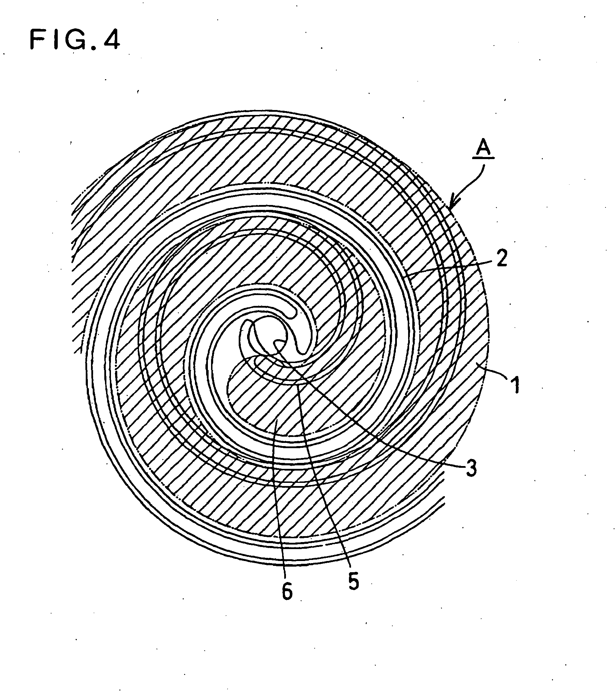

Fig. 4 is an enlarged view of the reference bore 3 formed at the center of the base circle or at the inner end of the orbiting wrap 2. The reference bore 3 is not within a sliding surface 6 which contacts the end of the fixed wrap 5.

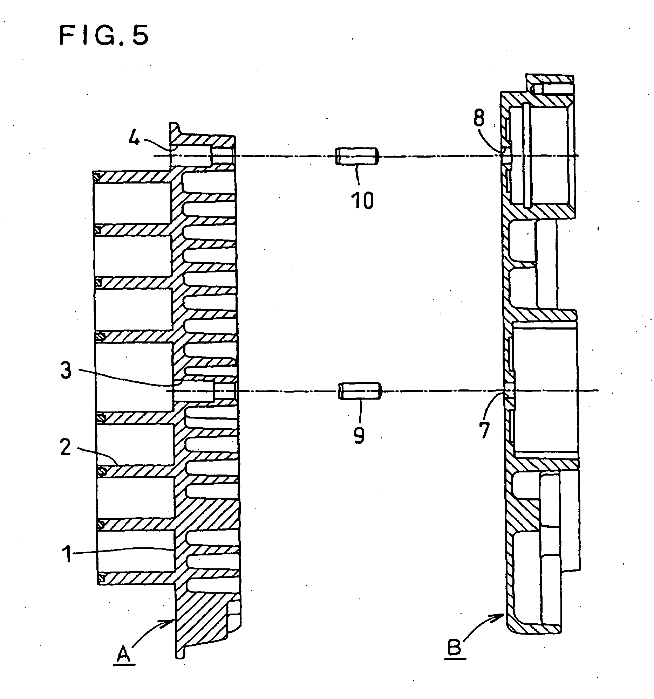

Fig. 5 is a vertical sectional side view of the orbiting scroll material "A" and the bearing plate material "B", in which axial reference bores 7, 8 are perforated respectively in portions of the bearing plate material "B" corresponding to the reference bores 3, 4 of the orbiting scroll material "A". Dowel pins 9, 10 in parallel are inserted into the reference bores in alignment.

If the reference bore and the dowel pin have non-circular cross section, a single dowel pin may be used with a single bore for each of orbiting material and bearing plate material.

The foregoing merely relates to an embodiment of the invention. Various changes and modifications may be made by a person skilled in the art without departing from the scope of claims.

## Claims

1. A method of manufacturing an orbiting scroll in a scroll fluid machine, the method comprising the steps of:
providing an orbiting scroll material;
forming a first reference bore axially in the orbiting scroll material at high precision on size and location;
forming an orbiting wrap and a plurality of cooling fins on the orbiting scroll material;
applying surface treatment on the orbiting scroll material;
providing a bearing plate material;
forming a second reference bore at high precision at a portion of the bearing plate material corresponding to the first reference bore of the orbiting scroll material;
aligning the first reference bore with the second reference bore without surface treatment to the bearing plate material; and
inserting a dowel pin into the first and second reference bores to combine the orbiting plate material with the bearing plate material to obtain the finished orbiting scroll.

2. A method as claimed in claim 1 wherein each of the first reference bore, the second reference bore and the pin has non-circular cross section.

3. A method as claimed in claim 1 wherein there are a plurality of first reference bores, a plurality of second reference bores and a plurality of pins, each having circular cross section.

4. A method as claimed in claim 1 wherein the first and second reference bores comprise through-bores.

5. A method as claimed in claim 1 wherein there are a first inner reference bore near a center of the orbiting scroll material and a second inner reference bore near a center of the bearing plate material, while there are a first outer reference bore near an outer circumference of the orbiting wrap of the orbiting scroll material and a second outer reference bore of the bearing plate material corresponding to the first outer reference bore of the orbiting scroll material.

6. A method as claimed in claim 5 wherein the first and second inner reference bores are formed at the center of the orbiting scroll material and the bearing plate material respectively.

7. A method as claimed in claim 1 wherein the orbiting scroll material is combined with the bearing plate material with a bolt and an adhesive.

8. A method as claimed in claim 5 wherein all the references bores are parallel with an axis of the orbiting scroll.

## Patentansprüche

1. Herstellungsverfahren einer umlaufende Spirale in einer Spiralverdichter, wobei das Verfahren die folgenden Stufen umfasst:
Vorbereitung eines umlaufenden Spiralenwerkstoffs;
Bildung einer ersten Referenzbohrung axial im umlaufenden Spiralenwerkstoff mit hoher Stellen- und Abmessungsgenauigkeit;
Bildung einer umlaufenden Wicklung und einer Mehrzahl von Kühlflügeln auf dem umlaufenden Spiralenwerkstoff;
Ausführung einer Oberflächenbehandlung auf dem umlaufenden Spiralenwerkstoff;
Vorbereitung eines Lagerplattenwerkstoffs;
Bildung einer zweiten Referenzbohrung mit hoher Genauigkeit an einem Teil des Lagerplattenwerkstoffs, das der ersten Referenzbohrung des umlaufenden Spiralenwerkstoffs entspricht;
Ausrichtung der ersten Referenzbohrung mit der zweiten Referenzbohrung ohne den Lagerplattenwerkstoff einer Oberflächenbehandlung zu beaufschlagen; und
Einführung eines Spannstiftes in die erste und zweite Referenzbohrungen, um den umlaufenden Plattenwerkstoff mit dem Lagerplattenwerkstoff zu kombinieren und die fertige umlaufende Spirale herzustellen.

2. Verfahren nach Anspruch 1 wobei jeweils die erste Referenzbohrung, die zweite Referenzbohrung und der Stift einen unkreisförmigen Querschnitt haben.

3. Verfahren nach Anspruch 1, wobei eine Mehrzahl von ersten Referenzbohrungen, eine Mehrzahl von zweiten Referenzbohrungen und eine Mehrzahl von Stiften vorhanden sind, jeweils mit einem kreisförmigen Querschnitt.

4. Verfahren nach Anspruch 1 wobei die erste und zweite Referenzbohrungen Durchbohrungen enthalten.

5. Verfahren nach Anspruch 1 wobein eine erste innere Referenzbohrung nah an einem Zentrum des umlaufenden Spiralenwerkstoffs und eine zweite innere Referenzbohrung nah an einem Zentrum des Lagerplattenwerkstoffs liegen, während eine erste äussere Referenzbohrung neben einem äusseren Umfang der umlaufenden Wicklung des umlaufenden Spiralenwerkstoffs und eine zweite äussere Referenzbohrung des der ersten äussere Referenzbohrung des umlaufenden Spiralenwerkstoffs entsprechenden Lagerplattenwerkstoffs liegen.

6. Verfahren nach Anspruch 5 wobei die erste und zweite inneren Referenzbohrungen am Zentrum des umlaufenden Spiralenwerkstoffs beziehungsweise des Lagerplattenwerkstoffs ausgebildet sind.

7. Verfahren nach Anspruch 1 wobei der umlaufende Spiralenwerkstoff mit dem Lagerplattenwerkstoff durch einen Bolzen und einen Klebstoff kombiniert ist.

8. Verfahren nach Anspruch 5 wobei sämtliche Referenzbohrungen zu einer Achse der umlaufenden Spirale parallel sind.

## Revendications

1. Procédé de fabrication de spirale orbitale dans un compresseur à spirales, lequel procédé comprend les phases suivantes:
Préparation d'un matériau pour spirale rotative;
Formation d'un premier alésage de référence axialement dans le matériau pour spirale rotative avec une grande précision de l'emplacement et des cotes;
Formation d'un bobinage rotatif et d'une pluralité d'ailettes de refroidissement sur le matériau pour spirale rotative;
Réalisation d'un traitement de surface sur le matériau pour spirale rotative;
Préparation d'un matériau de plaque d'appui;
Formation d'un second alésage de référence avec grande précisionau niveau d'une partie du matériau de plaque d'appui, qui correspond au premier alésage de référence du matériau pour spirale rotative;
Alignement du premier alésage de référence avec le second alésage de référence sans soumettre le matériau de plaque d'appui à un traitement de surface; et
Introduction d'une goupille élastique dans le premier et le second alésages de référence, pour combiner le matériau de plaque rotative au matériau de plaque d'appui et fabriquer la spirale rotative finie.

2. Procédé selon la revendication 1 dans lequel le premier alésage de référence, le second alésage de référence et la goupille ont tous une section transversale non circulaire.

3. Procédé selon la revendication 1, dans lequel on trouve une pluralité de premiers alésages de référence, une pluralité de seconds alésages de référence et une pluralité de goupilles, tous de section transversale circulaire.

4. Procédé selon la revendication 1 dans lequel les premiers et seconds alésages de référence comprennent des alésages traversants.

5. Procédé selon la revendication 1 dans lequel on trouve un premier alésage de référence interne près d'un centre du matériau pour spirale rotative et un second alésage de référence interne près d'un centre du matériau de plaque d'appui, de même qu'un premier alésage de référence externe près d'une circonférence externe du bobinage rotatif du matériau pour spirale rotative et un second alésage de référence externe du matériau de plaque d'appui correspondant au premier alésage de référence externe du matériau pour spirale rotative.

6. Procédé selon la revendication 5 dans lequel les premiers et seconds alésages de référence internes sont constitués au centre du matériau pour spirale rotative ou du matériau de plaque d'appui.

7. Procédé selon la revendication 1 dans lequel le matériau pour spirale rotative est combiné au matériau de plaque d'appui à l'aide d'un boulon et d'un adhésif.

8. Procédé selon la revendication 5 dans lequel tous les alésage de référence sont parallèles à un axe de la spirale rotative.
